# FASCICULE DE BREVET EUROPEEN

(11) **EP 2 643 215 B1**
(45) Date de publication et mention de la délivrance du brevet: **17.12.2014**
(21) Numéro de dépôt: 12700716.9
(22) Date de dépôt: 25.01.2012
(51) Int. Cl.: B64G 1/24, B64G 1/40, B64G 1/36

(54) **DISPOSITIF DE CONTRÔLE D'ATTITUDE D'UN SATELLITE ET PROCÉDÉ DE COMMANDE D'UN SATELLITE EMBARQUANT LEDIT DISPOSITIF**
VORRICHTUNG ZUR ÜBERWACHUNG DER LAGE EINES SATELLITEN UND VERFAHREN ZUR STEUERUNG EINES MIT DIESER VORRICHTUNG AUSGESTATTETEN SATELLITEN
DEVICE FOR MONITORING THE ATTITUDE OF A SATELLITE, AND METHOD FOR CONTROLLING A SATELLITE PROVIDED WITH SAID DEVICE

(30) Priorité: 25.01.2011 FR 1100217
(43) Date de publication de la demande: 02.10.2013
(73) Titulaire: Airbus Defence and Space SAS, 78130 Les Mureaux (FR)
(72) Inventeur: LAGADEC, Kristen, F-12120 Centres (FR); CHABOT, Thomas, F-31000 Toulouse (FR)
(74) Mandataire: Ribeiro Dias, Alexandre
(86) Numéro de dépôt international: PCT/EP2012/051121
(87) Numéro de publication internationale: WO 2012/101162

(56) Documents cités:
- EP-A1- 0 668 212
- EP-A1- 0 794 120
- DE-A1- 2 537 577
- DE-A1- 19 637 262
- US-A- 5 305 971
- KYROUDIS G A: "SURVEY OF SOLAR-SAILING CONFIGURATIONS FOR SATELLITE ATTITUDE CONTROL", PAPER AMERICAN ASTRONAUTICAL SOCIETY, XX, XX, vol. 91-486, 1 janvier 1991 (1991-01-01), pages 815-838, XP000671524,

## Description

La présente invention appartient au domaine du contrôle de l'attitude de satellites. Plus particulièrement, la présente invention concerne un dispositif de contrôle de l'attitude d'un satellite suivant trois axes, par exploitation de la pression solaire, ainsi qu'un procédé de commande d'un satellite embarquant un tel dispositif.

Pour les satellites placés à haute altitude par rapport à la Terre, l'une des sources principales de moments perturbateurs susceptibles d'entraîner une modification indésirable de l'attitude du satellite est la pression solaire. C'est le cas notamment pour les satellites placés en orbite géosynchrone (y compris en orbite géostationnaire à une altitude d'environ 36000 km), les satellites placés aux points de Lagrange, etc.

Pour contrôler l'attitude d'un tel satellite, il est connu, notamment, de cumuler les moments cinétiques induits par ces moments perturbateurs au moyen par exemple de roues de réaction. Ces roues de réaction accumulent le moment cinétique en augmentant progressivement leur vitesse de rotation, et doivent être dé-saturées régulièrement au moyen généralement de tuyères à ergols chimiques, pour réduire leurs vitesses de rotation.

On comprend qu'une telle solution présente l'inconvénient d'entraîner un surplus de consommation d'ergols pour dé-saturer les roues de réaction.

Pour les satellites comprenant des générateurs solaires munis de cellules photovoltaïques, destinés à fournir l'énergie électrique nécessaire au fonctionnement de la charge utile du satellite, il est connu d'exploiter la pression solaire en utilisant lesdits générateurs solaires comme voile solaire. En effet, il est possible de créer des moments en dépointant les générateurs solaires par rapport au Soleil, moments qui peuvent être utilisés pour modifier l'attitude du satellite et/ou pour dé-saturer les roues de réaction.

Toutefois, un tel dépointage des générateurs solaires entraîne une baisse sensible de la quantité d'énergie électrique générée. On comprend donc qu'il est peu souhaitable de dépointer les générateurs solaires.

Il est également connu, du brevet US 5305971, de munir les générateurs solaires de cellules électro-chromes. De telles cellules électro-chromes sont des cellules dont les propriétés optiques peuvent être modifiées par application d'une excitation électrique. En modifiant ainsi les propriétés optiques des générateurs solaires, il est possible de modifier la pression solaire subie par chacun des générateurs solaires, et de créer des moments suivant deux axes. Toutefois, pour créer des moments suivant trois axes indépendants, et donc contrôler l'attitude du satellite suivant trois axes en exploitant la pression solaire, la solution proposée nécessite de dépointer les générateurs solaires entraînant une baisse sensible de la quantité d'énergie électrique générée.

La présente invention vise notamment à proposer un dispositif de contrôle de l'attitude d'un satellite, exploitant la pression solaire, qui permette de contrôler l'attitude du satellite suivant trois axes différents indépendants sans nécessiter de dépointer les générateurs solaires par rapport au Soleil.

A cet effet, la présente invention concerne, selon un premier aspect, un dispositif de contrôle de l'attitude d'un satellite exploitant la pression solaire comportant au moins deux générateurs solaires destinés à être agencés de part et d'autre d'un corps central du satellite et présentant chacun une face à exposer au Soleil, dite « face avant ». Le dispositif comporte en outre au moins trois surfaces dont les propriétés optiques sont commandables, lesdites surfaces étant agencées :
- sur des ailettes liées aux générateurs solaires, chaque ailette étant destinée à occuper une position fixe par rapport au générateur solaire auquel elle est liée, et
- de sorte qu'au moins deux desdites surfaces à propriétés optiques commandables sont non parallèles lorsque les faces avant des générateurs solaires sont orientées de façon optimale par rapport au Soleil.

Le dispositif comporte également un module de commande adapté à commander séparément les propriétés optiques de chaque surface à propriétés optiques commandables, de sorte que des moments suivant trois axes indépendants peuvent être créés en maintenant les faces avant des générateurs solaires selon leur orientation optimale par rapport au Soleil.

Suivant des modes particuliers de réalisation, le dispositif comporte l'une ou plusieurs des caractéristiques suivantes, prises isolément ou suivant toutes les combinaisons techniquement possibles :
- le dispositif comporte au moins quatre ailettes à surfaces à propriétés optiques commandables sensiblement planes, chacune de ces surfaces étant destinées à présenter une inclinaison constante par rapport à la face avant du générateur solaire auquel ladite surface est liée ;
- l'inclinaison, entre la surface à propriétés optiques commandables de chaque ailette et la face avant du générateur solaire auquel est liée ladite ailette, est de valeur absolue comprise entre 5° et 45°, de préférence comprise entre 5° et 20° ;
- les ailettes d'une paire d'ailettes d'un générateur solaire sont destinées à présenter sensiblement la même inclinaison par rapport à la face avant de ce générateur solaire ;
- au moins une surface à propriétés optiques commandables comporte un matériau électro-chrome, de préférence un matériau électro-chrome pouvant prendre au moins deux états optiques ;
- au moins une surface à propriétés optiques commandables comporte un réseau de plusieurs cellules à propriétés optiques commandables, le module de commande étant adapté à commander séparément chaque cellule à propriétés optiques commandables ;
- au moins une surface à propriétés optiques commandables est réalisée avec un élément à propriétés optiques statiques, l'élément à propriétés optiques statiques comportant au moins deux zones à propriétés optiques statiques différentes, et avec des moyens de modifier mécaniquement la proportion respective de chacune des au moins deux zones à propriétés optiques statiques différentes dans la partie l'élément à propriétés optiques statiques qui est exposée aux rayons du Soleil ;
- l'élément à propriétés optiques statiques est une bande, et le dispositif comporte au moins un rouleau dont la rotation entraîne le défilement de la bande et la modification, dans la partie de la bande exposée aux rayons du Soleil, de la proportion respective de chacune des au moins deux zones à propriétés optiques statiques différentes.

Selon un second aspect, la présente invention a pour objet un satellite destiné à être placé en orbite géosynchrone, comportant un dispositif de contrôle d'attitude selon l'invention.

Selon un troisième aspect, la présente invention a pour objet un procédé de commande d'un satellite selon l'invention, comportant les étapes de :
- détermination d'une orientation optimale des faces avant des générateurs solaires par rapport au Soleil,
- orientation des faces avant des générateurs solaires selon l'orientation optimale,
- détermination d'un moment à former suivant trois axes indépendants pour contrôler l'attitude du satellite,
- commande des propriétés optiques des surfaces à propriétés optiques commandables de sorte à former lesdits moments de contrôle d'attitude, tout en maintenant les faces avant des générateurs solaires selon leur orientation optimale.

De préférence, les propriétés optiques des surfaces sont modulées dans le temps de sorte à obtenir un état optique correspondant à une moyenne pondérée des états optiques disponibles pour lesdites surfaces.

L'invention sera mieux comprise à la lecture de la description suivante, donnée à titre d'exemple nullement limitatif, et faite en se référant aux figures qui représentent :
- Figure 1 : une représentation schématique d'un satellite en orbite, embarquant un dispositif de contrôle d'attitude selon l'invention,
- Figures 2a, 2b et 2c : des représentations schématiques d'un mode préféré de réalisation d'un dispositif selon l'invention,
- Figures 3a, 3b et 3c : des représentations schématiques illustrant la mise en oeuvre du dispositif de la figure 2a pour former des moments suivant trois axes indépendants,
- Figures 4a, 4b et 4c : des courbes illustrant des exemples de moments maximums formés suivant trois axes par mise en oeuvre d'un dispositif du type illustré par la figure 2a,
- Figures 5a, 5b et 5c : des représentations schématiques d'exemples de réalisation d'une variante du dispositif,
- Figures 6a, 6b et 6c : des représentations schématiques d'une autre variante de réalisation du dispositif,
- Figure 7 : un diagramme représentant schématiquement les principales étapes d'un procédé de commande d'un satellite comportant un dispositif de contrôle de l'attitude selon l'invention.

La présente invention concerne un dispositif de contrôle de l'attitude d'un satellite 10 suivant trois axes, exploitant la pression solaire, ainsi qu'un procédé de commande d'un satellite embarquant ledit dispositif.

La présente invention concerne les satellites destinés à être mis à poste dans une zone de l'espace où les effets de la pression solaire ne sont pas négligeables. L'invention concerne en particulier les satellites placés en orbite géosynchrone (y compris en orbite géostationnaire dite orbite GEO à une altitude d'environ 36000 km), les satellites placés aux points de Lagrange, etc., pour lesquels la pression de radiation solaire est l'un des effets perturbateurs les plus importants

Dans la suite de la description, on se place de manière non limitative dans le cas d'un satellite 10 placé en orbite GEO.

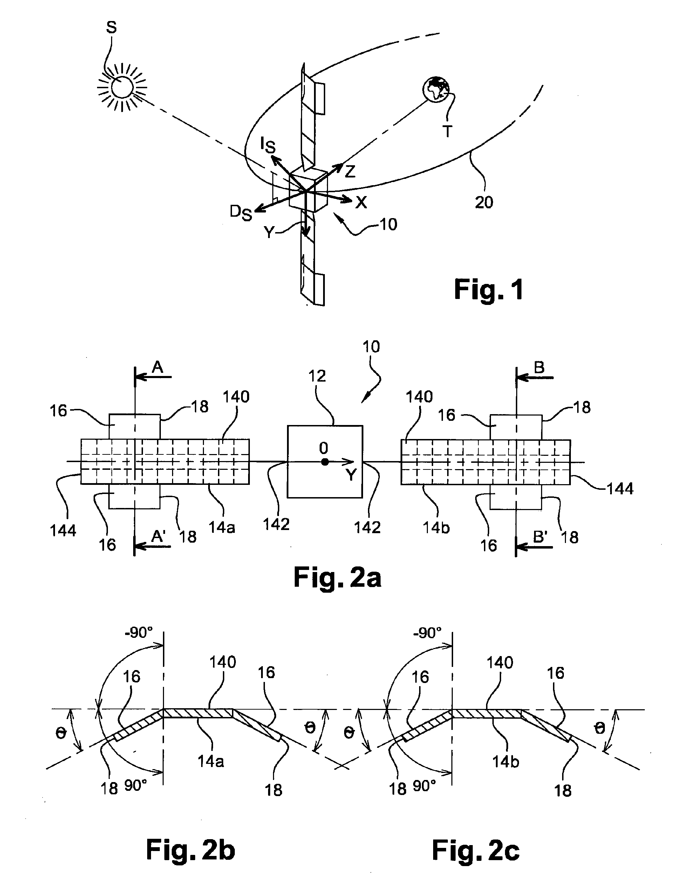

La figure 1 représente très schématiquement un satellite 10 mis à poste sur l'orbite GEO autour de la Terre T.

On définit un repère associé au satellite 10, centré sur le centre O de masse du satellite, comportant trois axes couramment appelés axe de roulis X, axe de tangage Y et axe de lacet Z. A poste, l'axe de lacet Z est dirigé vers la Terre T, l'axe de tangage Y est orthogonal au plan de l'orbite GEO, et l'axe de roulis X complète le trièdre orthonormé et est orienté selon la direction du vecteur vitesse du satellite 10.

On définit également un axe D_{S}, qui correspond à la projection de la direction satellite / Soleil S sur le plan (X, Z), et un axe I_{S}, dans le plan (X, Z) et orthogonal à l'axe D_{S}.

Le satellite 10 comporte deux générateurs solaires, respectivement 14a et 14b, agencés en position de service de part et d'autre d'un corps central 12 du satellite 10, s'étendant sensiblement suivant un axe de rotation desdits générateurs solaires.

Par « en position de service », on entend la position que lesdits générateurs solaires 14a, 14b sont destinés à occuper dans le satellite en service, à poste en orbite GEO.

On comprend en effet que lesdits générateurs solaires peuvent occuper d'autres positions avant d'occuper leur position de service. Par exemple, les générateurs solaires sont généralement constitués de panneaux repliés sur eux-mêmes au lancement, et sont déployés une fois le satellite mis à poste sur l'orbite GEO ou sur une orbite de transfert. Dans ce cas, la position de service des générateurs solaires est la position de ces générateurs solaires après déploiement.

A des fins de clarté, on se place dans le cas où le satellite 10 est contrôlé en attitude de sorte à maintenir l'axe de rotation des générateurs solaires 14a, 14b sensiblement perpendiculaire au plan orbital. Les rayons du Soleil n'ont alors une incidence sensiblement normale sur lesdits générateurs solaires qu'aux équinoxes.

Rien n'exclut, suivant d'autres exemples non détaillés, de considérer que l'axe de rotation peut être incliné par rapport à la normale au plan orbital, par exemple pour assurer une incidence normale des rayons solaires sur lesdits générateurs solaires 14a et 14b, y compris aux solstices.

Chaque générateur solaire 14a, 14b comporte une face sensiblement plane sur laquelle sont agencées des cellules photovoltaïques, dite « face avant » 140. La face avant 140 de chaque générateur solaire 14a, 14b est orientée vers le Soleil pour générer l'électricité nécessaire au fonctionnement notamment de la charge utile du satellite 10. Dans le cas où l'axe de rotation est maintenu sensiblement perpendiculaire au plan orbital, l'orientation optimale des faces avant des générateurs solaires est obtenue, par rotation des générateurs solaires autour de l'axe Y, lorsque l'axe D_{S} est sensiblement orthogonal auxdites faces avant 140.

Le dispositif de contrôle de l'attitude du satellite 10 comporte également au moins trois surfaces 16 dont les propriétés optiques sont commandables.

Par « propriétés optiques », on entend les propriétés de transmission, d'absorption et de réflexion de la lumière.

On comprend qu'en modifiant les propriétés optiques d'une surface à propriétés optiques commandables, il sera possible de modifier la pression solaire sur cette surface. Les surfaces à propriétés optiques commandables peuvent être réalisées au moyen de différentes technologies, dont des exemples seront donnés plus loin dans la description.

Les au moins trois surfaces 16 à propriétés optiques commandables sont avantageusement liées aux générateurs solaires 14a, 14b. Par « liée au panneau solaire », on entend qu'une surface est portée par le générateur solaire ou par un élément lui-même porté par le générateur solaire.

Les au moins trois surfaces 16 à propriétés optiques commandables sont agencées, par rapport aux générateurs solaires 14a, 14b, de sorte que, lorsque les faces avant 140 desdits générateurs solaires sont orientées vers le Soleil, lesdites au moins trois surfaces à propriétés optiques commandables sont exposées aux rayons du Soleil.

En outre les au moins trois surfaces 16 à propriétés optiques commandables sont agencées de sorte que au moins deux surfaces 16 à propriétés optiques commandables sont non parallèles lorsque les faces avant 140 des générateurs solaires sont orientées, l'une par rapport à l'autre, de façon optimale par rapport au Soleil.

Dans le cas de générateurs solaires 14a, 14b mobiles en rotation suivant un même axe sensiblement perpendiculaire au plan de l'orbite, l'orientation optimale correspond à des faces avant 140 sensiblement orthogonales à la direction D_{S}, et les au moins trois surfaces 16 à propriétés optiques commandables sont agencées de sorte que au moins deux desdites surfaces sont non parallèles lorsque les faces avant 140 des générateurs solaires 14a, 14b sont parallèles.

On note que la consigne d'orientation optimale ne correspond pas nécessairement à une incidence normale des rayons solaires sur les générateurs solaires 14a, 14b.

En effet, pour obtenir une incidence sensiblement normale des rayons solaires sur les générateurs solaires, sans incliner le satellite 10 par rapport au plan de l'orbite, il faut un mécanisme à deux axes de rotation pour chaque générateur solaire 14a, 14b. En considérant des générateurs solaires 14a, 14b mobiles en rotation suivant un seul axe sensiblement perpendiculaire au plan de l'orbite, l'orientation optimale correspond à des faces avant 140 sensiblement orthogonales à la direction D_{S}, qui est la projection de la direction satellite / Soleil dans le plan (X, Z).

En agençant de la sorte les surfaces 16 à propriétés optiques commandables sur les générateurs solaires 14a, 14b, on assure que lesdites surfaces sont adaptées à permettre la création de moments suivant trois axes indépendants (c'est-à-dire trois axes de vecteurs linéairement indépendants).

De préférence, chaque générateur solaire comporte au moins une surface 16 à propriétés optiques commandables, et au moins deux surfaces 16 à propriétés optiques commandables sont agencées de part et d'autre de l'axe de rotation d'un générateur solaire 14a, 14b.

Le dispositif comporte en outre un module de commande (non représenté sur les figures) adapté à commander séparément les propriétés optiques de chaque surface, de sorte à modifier les forces induites par la pression solaire sur lesdites surfaces à propriétés optiques commandables. De la sorte, il est possible de créer des moments plus ou moins importants suivant trois axes indépendants, sans avoir à dépointer les générateurs solaires 14a, 14b par rapport au Soleil, uniquement par modification des propriétés optiques des surfaces 16 à propriétés optiques commandables.

De préférence, le module de commande comporte au moins un microprocesseur et des moyens de mémorisation (disque dur magnétique, mémoire flash, disque optique, etc.) dans lesquels est mémorisé un produit programme d'ordinateur, sous la forme d'un ensemble d'instructions de code de programme à exécuter pour mettre en oeuvre les différentes étapes d'un procédé de contrôle de l'attitude du satellite 10. Suivant certains modes de réalisation, le module de commande comporte également un ou des circuits logiques programmables, de type FPGA, PLD, etc., adaptés à mettre en oeuvre tout ou partie des étapes du procédé.

Les figures 2a, 2b et 2c représentent schématiquement un mode préféré de réalisation du dispositif de contrôle d'attitude sur un satellite 10.

Plus particulièrement la figure 2a représente le satellite 10, les générateurs solaires 14a, 14b étant vus sous incidence normale, et les figures 2b et 2c représentent des coupes des générateurs solaires 14a et 14b, dans les plans de coupe respectivement A-A' et B-B' visibles sur la figure 2a.

Dans ce mode de réalisation, le dispositif comporte quatre surfaces 16 à propriétés optiques commandables agencées respectivement sur quatre ailettes 18 latérales liées mécaniquement aux générateurs solaires 14a, 14b, chaque générateur solaire comprenant une paire d'ailettes 18.

On se place, dans la suite de la description dans le cas non limitatif où une surface 16 à propriétés optiques commandables occupe toute une face d'une ailette 18. Rien n'exclut, suivant d'autres exemples non représentés, que ladite surface 16 à propriétés optiques commandables n'occupe qu'une partie d'une face de l'ailette 18.

Du fait des ailettes 18, les générateurs solaires 14a, 14b peuvent être dotés de surfaces à propriétés optiques commandables sans impacter la superficie disponible sur chaque face avant pour les cellules photovoltaïques. De plus, en utilisant des ailettes, il est possible d'écarter davantage les surfaces 16 à propriétés optiques commandables de l'axe de rotation du générateur solaire 14a, 14b auquel ces ailettes sont liées, ce qui tend, on le verra par la suite à augmenter la capacité de création de moment suivant ledit axe de rotation.

En outre, de telles ailettes permettent de découpler la fabrication des ailettes 18 de celle des générateurs solaires 14a, 14b. Ceci est avantageux car les générateurs solaires sont des éléments sensibles qui représentent une part importante du coût final d'un satellite. Seules les liaisons entre les ailettes 18 et les générateurs solaires doivent être prévues sur les générateurs solaires.

Il est à noter que, en position de service, de telles ailettes 18 occupent avantageusement une position fixe prédéterminée par rapport aux générateurs solaires 14a, 14b auxquels elles sont liées.

Comme précédemment, on entend par « position de service » d'une ailette la position que ladite ailette est destinée à occuper dans le satellite 10 en service, à poste en orbite GEO. En effet, on comprend qu'une telle ailette peut occuper d'autres positions avant d'occuper sa position de service. Par exemple, à des fins de limiter le volume au lancement, une telle ailette sera de préférence repliée pour n'être déployée qu'une fois le satellite mis à poste sur l'orbite GEO ou sur une orbite de transfert. Dans ce cas, la position de service des ailettes 18 est la position de ces ailettes après déploiement.

Du fait que chaque ailette est fixe en position de service, c'est-à-dire que chaque ailette 18 est immobile par rapport au générateur solaire 14a, 14b auquel elle est liée, éventuellement après déploiement, la liaison entre une telle ailette et un générateur solaire peut se faire de façon simple et robuste. Une liaison adaptée se présente par exemple sous la forme d'une charnière avec un ressort permettant de déployer l'ailette 18 et de la maintenir immobile contre une butée de géométrie adaptée à donner à l'ailette l'inclinaison souhaitée par rapport à la face avant 140 du générateur solaire auquel l'ailette est liée.

Dans le mode de réalisation illustré par les figures 2b et 2c, chaque ailette 18 est sensiblement plane et présente, en position de service, une inclinaison constante par rapport à la face avant du générateur solaire 14a, 14b auquel ladite ailette est liée.

Une ailette 18 sensiblement plane est avantageuse dans la mesure où elle est plus simple à mettre en oeuvre, et en particulier plus simple à replier sur un générateur solaire pour le lancement du satellite 10. Dans le cas d'ailettes 18 repliées sur un générateur solaire 14a, 14b et déployées latéralement, lesdites ailettes une fois déployées sont sensiblement parallèles à l'axe de rotation du générateur solaire auquel elles sont liées.

Tel qu'illustré sur les figures 2b et 2c, les ailettes 18 d'un générateur solaire sont de préférence agencées par paires de part et d'autre de l'axe de rotation de ce générateur solaire, et l'inclinaison est sensiblement la même pour chaque ailette 18 du dispositif.

En d'autres termes, les angles d'inclinaison de chaque ailette 18 ont sensiblement la même valeur θ. Par convention, une valeur de 0° correspond à une absence d'inclinaison entre une ailette 18 et la face avant 140 d'un générateur solaire. Une valeur positive correspond à une inclinaison vers l'arrière, une valeur négative correspond à une inclinaison vers l'avant du générateur solaire.

En outre, les ailettes 18 ont de préférence toutes les mêmes formes et dimensions, et les ailettes 18 sont placées sensiblement à la même distance d'une extrémité 142 de raccordement du générateur solaire 14a, 14b au corps central 12 du satellite 10. Dans l'exemple non limitatif représenté sur les figures 2b et 2c, les deux générateurs solaires 14a, 14b ont sensiblement le même agencement, de sorte que les paires d'ailettes des deux générateurs solaires 14a et 14b sont sensiblement à la même distance du corps du satellite 10.

Un tel agencement des ailettes 18 en paires symétriques permet de mieux contrôler l'attitude du satellite 10, et de limiter les moments perturbateurs éventuellement induits par les ailettes 18 en dehors des phases de contrôle d'attitude exploitant la pression solaire. En effet, si les surfaces 16 sont placées dans le même état optique, aucun moment perturbateur ne sera créé par les ailettes 18, sous incidence normale des rayons solaires sur les générateurs solaires 14a, 14b. En commandant différemment lesdites surfaces 16, des moments pourront être créés suivant trois axes indépendants.

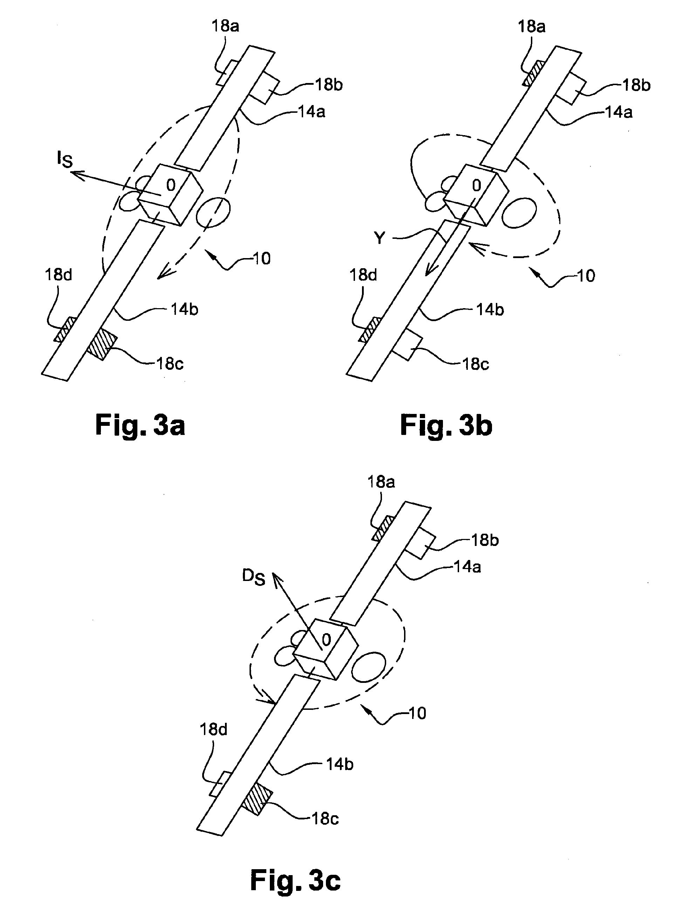

Les figures 3a, 3b et 3c représentent schématiquement des exemples de mise en oeuvre des ailettes 18 de sorte à obtenir des moments suivant trois axes indépendants, dans le cas du dispositif illustré par les figures 2a à 2c.

A des fins de clarté, et de manière non limitative, on suppose pour simplifier que les rayons solaires ont une incidence normale sur les deux générateurs solaires 14a et 14b, c'est-à-dire que la direction D_{S} est parallèle à la direction des rayons du Soleil et est orthogonale aux faces avant 140 des générateurs solaires 14a, 14b. En outre, on suppose pour simplifier que chaque surface 16 à propriétés optiques commandables peut prendre deux états optiques différents : un état absorbant et un état réfléchissant, la norme d'une force engendrée par la pression solaire sur une surface 16 étant supérieure lorsque ladite surface est réfléchissante que lorsque celle-ci est absorbante.

Sur les figures 3a à 3c, une ailette hachurée correspond à une surface à propriété optiques commandables dans l'état absorbant ; une ailette non hachurée correspond à une surface à propriété optiques commandables dans l'état réfléchissant.

Sur les figures 3a à 3c, on désigne par première ailette 18a et seconde ailette 18b les ailettes du générateur solaire 14a, et par troisième ailette 18c et quatrième ailette 18d les ailettes du générateur solaire 14b. La première ailette 18a et la quatrième ailette 18d sont d'un même côté du satellite 10 par rapport à l'axe Y de rotation des générateurs solaires 14a, 14b, et la seconde ailette 18b et la troisième ailette 18c sont de l'autre côté du satellite 10 par rapport à l'axe Y (à droite sur les figures).

La figure 3a illustre la mise en oeuvre des ailettes 18a, 18b, 18c, 18d pour créer principalement un moment d'axe I_{S}. Un moment d'axe I_{S} est par exemple obtenu en commandant les surfaces 16 de sorte que la première ailette 18a et la seconde ailette 18b sont placées dans un état réfléchissant, tandis que la troisième ailette 18c et la quatrième ailette 18d sont placées dans un état absorbant. Une telle mise en oeuvre des ailettes tend à faire tourner dans le sens indiqué par la flèche en traits discontinus (le sens opposé étant obtenu en inversant les états absorbants et réfléchissants des ailettes).

La figure 3b illustre la mise en oeuvre des ailettes 18a, 18b, 18c, 18d pour créer principalement un moment d'axe parallèle à l'axe Y de rotation des générateurs solaires 14a, 14b. Un tel moment est par exemple obtenu en commandant les surfaces 16 de sorte que la première ailette 18a et la quatrième ailette 18d sont placées dans un état absorbant, tandis que la seconde ailette 18b et la troisième ailette 18c sont placées dans un état réfléchissant. Une telle mise en oeuvre des ailettes tend à faire tourner le satellite dans le sens indiqué par la flèche en traits discontinus (le sens opposé étant obtenu en inversant les états absorbants et réfléchissants des ailettes).

La figure 3c illustre la mise en oeuvre des ailettes 18a, 18b, 18c, 18d pour créer principalement un moment d'axe D_{S}, connu sous le nom de moment de moulin à vent solaire. Un tel moment est par exemple obtenu en commandant les surfaces 16 de sorte que la première ailette 18a et la troisième ailette 18c sont placées dans un état absorbant, tandis que la seconde ailette 18b et la quatrième ailette 18d sont placées dans un état réfléchissant. Une telle mise en oeuvre des ailettes tend à faire tourner le satellite dans le sens indiqué par la flèche en traits discontinus (le sens opposé étant obtenu en inversant les états absorbants et réfléchissants des ailettes).

On comprend donc, à la lecture des figures 3a à 3c que le dispositif selon l'invention est adapté à créer des moments suivants trois axes indépendants, et ce sans avoir à dépointer les générateurs solaires qui peuvent demeurer pointés dans la direction D_{S} pendant toute la durée du contrôle d'attitude, évitant la baisse d'énergie électrique associée à un dépointage desdits générateurs solaires 14a, 14b.

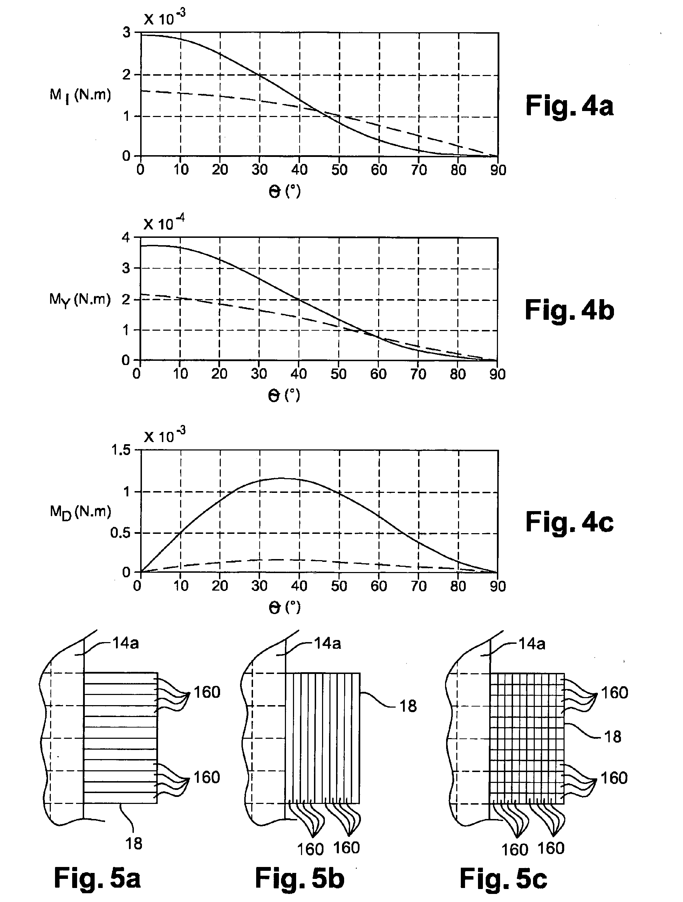

Les figures 4a, 4b et 4c représentent respectivement des estimations des capacités en moment (c'est-à-dire des moments maximums pouvant être créés) pour les axes respectivement I_{S}, Y et D_{S}, désignés sur ces figures par M_{I}, M_{Y} et M_{D}. Dans ces figures, on a représenté l'influence de la valeur θ de l'inclinaison, la même pour toutes les ailettes 18, sur la capacité en moment du dispositif de contrôle d'attitude.

Sur les figures 4a à 4c, on considère des surfaces 16 à propriétés optiques commandables constituées d'un matériau électro-chrome permettant une transition d'un état transparent à un état opaque. Sur chacune de ces figures, on a représenté deux courbes correspondant aux capacités en moment estimées pour différentes valeurs de la réflectivité de l'état opaque ρ : ρ = 0.1 (traits discontinus) et ρ = 1 (traits pleins).

On voit que les moments d'axes I_{S} et Y sont maximaux lorsque les ailettes ne sont pas inclinées (θ = 0°). Toutefois, le moment créé suivant l'axe D_{S} est alors nul. On constate également que, pour une valeur θ comprise entre 5° et 45°, les moments d'axes I_{S} et Y ne sont pas trop réduits par rapport à ceux obtenus en l'absence d'inclinaison, et qu'il est également possible de créer des moments d'axe D_{S}. Par conséquent, les ailettes 18 sont de préférence inclinées, en position de service, d'un angle de valeur θ constante comprise entre 5° et 45°.

De manière encore plus préférentielle, les ailettes 18 sont inclinées d'un angle de valeur θ constante comprise entre 5° et 20°. Une telle inclinaison permet de privilégier la capacité en moment suivant l'axe I_{S}, ce qui est avantageux car les moments perturbateurs prépondérants sont d'axe I_{S}.

Par exemple, chaque ailette 18 du dispositif de contrôle d'attitude présente, en position de service, une inclinaison constante de 15° par rapport à la face avant 140 du générateur solaire 14a, 14b auquel elle est liée.

Ces plages de valeurs sont généralisables à d'autres modes de réalisation du dispositif, y compris les modes de réalisation dans lesquels les ailettes 18 n'ont pas toutes la même inclinaison. En effet, l'inclinaison des ailettes 18 vise principalement à permettre la création de moments de moulin à vent solaire sans avoir à dépointer les générateurs solaires 14a, 14b, et on a vu que les moments perturbateurs de moulin à vent solaire sont faibles en pratique par rapport aux moments perturbateurs d'axe I_{S}.

En outre, on note qu'il est équivalent d'un point de vue capacité en moment de considérer des ailettes 18 toutes inclinées vers l'arrière ou toutes inclinées vers l'avant. Dans le cas d'une inclinaison vers l'avant des ailettes 18, l'inclinaison sera de préférence de valeur θ constante comprise entre - 5° et - 45° (voire comprise entre - 5° et - 20°).

De manière plus générale, et compte tenu de la convention adoptée pour l'inclinaison, cela revient à avoir une inclinaison constante de valeur absolue comprise entre 5° et 45°, de préférence comprise entre 5° et 20°.

Il est à noter en outre que la capacité en moment suivant les axes I_{S} et Y augmente à mesure que la distance des ailettes 18 à ces axes augmente. On comprend donc notamment que les ailettes 18 sont de préférence agencées à proximité d'une extrémité 144 terminale d'un générateur solaire opposée à l'extrémité 142 de raccordement de ce générateur solaire au corps central 12 du satellite 10, c'est-à-dire plus proches de ladite extrémité terminale que de ladite extrémité 142 de raccordement. Les ailettes 18 sont par exemple agencées à proximité de coins des générateurs solaires 14a, 14b. De plus, l'utilisation d'ailettes 18 permet d'écarter davantage les surfaces 16 à propriétés optiques commandables de l'axe Y, ce qui permet d'augmenter la capacité en moment par rapport à des surfaces 16 à propriétés optiques qui seraient agencées sur les faces avant 140 des générateurs solaires 14a, 14b.

Les figures 5a, 5b et 5c représentent schématiquement une variante préférée de réalisation du dispositif, compatible avec tous les modes de réalisation dudit dispositif. Dans cette variante, chaque surface 16 à propriétés optiques commandables comporte un réseau de cellules 160 à propriétés optiques commandables, et le module de commande est adapté à commander séparément chaque cellule à propriétés optiques commandables.

L'utilisation de réseaux de cellules 160 à propriétés optiques commandables permet d'augmenter le nombre d'états optiques possibles pour chaque surface 16. On comprend en effet que si une surface 16 comprend N cellules à propriétés optiques commandables à deux états optiques, ladite surface 16 pourra être placée dans de nombreux états optiques différents (de l'ordre de N+1 états optiques).

Les figures 5a, 5b et 5c représentent schématiquement trois exemples de réalisation de cette variante. Sur les figures 5a et 5b, le réseau est à une dimension. Sur la figure 5a, les cellules 160 sont agencées en lignes sensiblement orthogonales à un côté du générateur solaire 14a. Sur la figure 5b, les cellules 160 sont agencées en colonnes sensiblement parallèles à un côté du générateur solaire 14a, Sur la figure 5c, le réseau de cellules 160 est matriciel.

Dans une variante préférée, les surfaces 16 à propriétés optiques commandables sont réalisées au moyen d'un matériau électro-chrome. De tels matériaux électro-chromes sont considérés comme connus de l'homme de l'art, et des exemples de matériaux adaptés sont commercialisés notamment par les sociétés Eclipse Energy Systems et Ashwin-Ushas Corporation.

De tels matériaux électro-chromes disposent d'au moins deux états optiques, et une transition d'un état optique à un autre s'effectue en leur appliquant une excitation électrique adaptée. Différents types de matériaux électro-chromes sont disponibles, permettant d'obtenir notamment les transitions suivantes :
- Type 1 : transition de transparent à opaque absorbant,
- Type 2 : transition de transparent à opaque réfléchissant,
- Type 3 : transition de opaque absorbant à opaque réfléchissant.

Suivant certains exemples de réalisation, certains états optiques sont obtenus en combinant un matériau électro-chrome avec un autre matériau. Par exemple, une transition de opaque absorbant à opaque réfléchissant peut être obtenue en plaçant, sur un matériau opaque réfléchissant (aluminium, etc.), un film de matériau électro-chrome de Type 1.

Dans une autre variante préférée, les surfaces 16 à propriétés optiques sont commandables mécaniquement. De préférence, une telle surface à propriétés optiques commandables est réalisée avec :
- un élément à propriétés optiques statiques (c'est-à-dire essentiellement fixes au cours du temps), ledit élément à propriétés optiques statiques comportant au moins deux zones à propriétés optiques statiques différentes,
- des moyens de modifier mécaniquement les propriétés optiques par une modification de la proportion respective de chacune des au moins deux zones à propriétés optiques statiques différentes dans la partie de l'élément à propriétés optiques statiques qui est exposée aux rayons du Soleil.

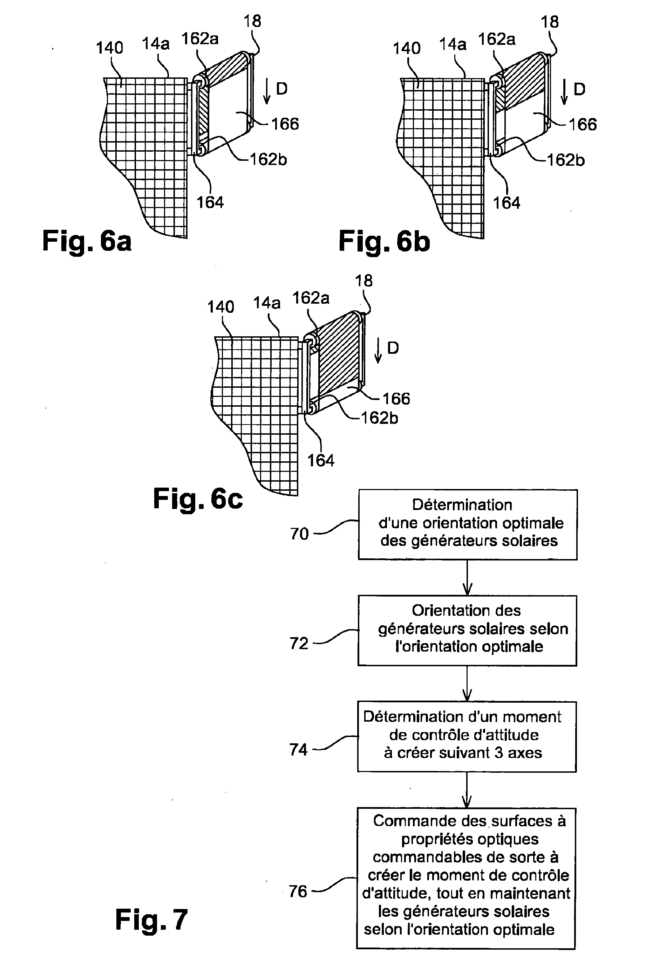

Les figures 6a, 6b et 6c représentent très schématiquement un mode préféré de réalisation de telles surfaces 16 à propriétés optiques commandables mécaniquement.

Dans l'exemple illustré par les figures 6a à 6c, les surfaces à propriétés optiques commandables sont agencées sur des ailettes 18 latérales fixes, en position de service, par rapport aux générateurs solaires. Seule une ailette 18 latérale est représentée sur ces figures.

Les moyens de modifier mécaniquement les propriétés optiques comportent, dans l'exemple illustré par les figures 6a à 6c, principalement deux rouleaux 162a, 162b sensiblement parallèles. Les rouleaux 162a, 162b sont mobiles en rotation et sont agencés au niveau de deux côtés opposés d'un cadre 164. Les moyens de modifier mécaniquement les propriétés optiques comportent également un moyen d'entraîner au moins l'un des rouleaux en rotation, tel qu'un moteur électrique pas à pas (non représenté sur les figures) piloté par le module de commande du dispositif.

L'ailette 18 comporte en outre un élément à propriétés optiques statiques constitué principalement par une bande 166 entourant les rouleaux 162a, 162b, par exemple une bande en polyimide. Une partie de la bande 166 est orientée vers l'avant du générateur solaire 14a et est exposée aux rayons du Soleil, tandis qu'une autre partie de ladite bande est orientée vers l'arrière du générateur solaire 14a et n'est pas exposée au Soleil.

La rotation d'au moins un rouleau 162a, 162b entraîne le défilement de la bande 166 suivant une direction D de défilement.

La bande 166 comporte deux zones de propriétés optiques statiques différentes, par exemple une zone noire (zone hachurée sur les figures 6a à 6c) et une zone blanche (non hachurée sur les figures 6a à 6c).

Chaque zone occupe par exemple la moitié de la surface totale de la bande 166, et s'étend de préférence sur toute la largeur (considérée transversalement à la direction D de défilement) de ladite bande.

On comprend donc que le défilement de la bande 166 entraîne le défilement des zones noire et blanche, et fait varier, dans la partie de la bande 166 exposée aux rayons du Soleil, la proportion de zone noire et de zone blanche. Cette variation de la proportion de zone noire et de zone blanche exposées aux rayons du Soleil permet de faire varier les propriétés optiques de la partie de la bande 166 exposée aux rayons du Soleil. On comprend donc que la surface à propriétés optiques commandables correspond à la partie de la bande 166 exposée aux rayons du Soleil.

De manière plus générale, les surfaces à propriétés optiques commandables peuvent être réalisées avec d'autres types de matériaux. On peut citer, à titre d'autre exemple nullement limitatif, des surfaces à propriétés optiques commandables réalisées avec des écrans à cristaux liquides.

La figure 7 représente les principales étapes d'un procédé de commande d'un satellite 10 comprenant un dispositif selon l'invention, lesquelles sont :
- 70 détermination d'une orientation optimale des faces avant 140 des générateurs solaires 14a, 14b par rapport au Soleil,
- 72 orientation des faces avant 140 des générateurs solaires 14a, 14b selon l'orientation optimale,
- 74 détermination d'un moment à créer suivant trois axes indépendants pour contrôler l'attitude du satellite 10,
- 76 commande des propriétés optiques des surfaces 16 à propriétés optiques commandables de sorte à créer les moments de contrôle d'attitude déterminés à l'étape 74, tout en maintenant les faces avant 140 des générateurs solaires 14a, 14b selon leur orientation optimale par rapport au Soleil.

On note que la consigne d'orientation optimale ne correspond pas nécessairement à une incidence normale des rayons solaires sur les générateurs solaires 14a, 14b.

En effet, pour obtenir une incidence sensiblement normale des rayons solaires sur les générateurs solaires, sans incliner le satellite 10 par rapport au plan de l'orbite, il faut un mécanisme à deux axes de rotation pour chaque générateur solaire 14a, 14b. En considérant des générateurs solaires 14a, 14b mobiles en rotation suivant un seul axe sensiblement perpendiculaire au plan de l'orbite, l'orientation optimale correspond à des faces avant 140 sensiblement orthogonales à la direction D_{S}, qui est la projection de la direction satellite / Soleil dans le plan (X, Z).

Dans un mode particulier de mise en oeuvre, les propriétés optiques des surfaces 16 sont modulées dans le temps, de sorte à pouvoir obtenir un état optique correspondant à une moyenne pondérée des états optiques instantanés disponibles pour lesdites surfaces.

Par exemple, pour une surface 16 pouvant prendre deux valeurs ρ₁ et ρ₂ de réflectivité différentes, des valeurs de réflectivité comprises entre ρ₁ et ρ₂ pourront être obtenues en modifiant, au cours d'un intervalle temporel de durée T₀ prédéfinie, les durées pendant lesquelles la surface 16 a une réflectivité ρ₁ (durée τ) et une réflectivité ρ₂ (durée T₀-τ) : la réflectivité moyenne sur l'intervalle de durée T₀ est alors égale à (ρ₁·τ + ρ₂·(T₀-τ))/T₀.

La présente invention propose donc un dispositif adapté pour le contrôle de l'attitude d'un satellite 10 suivant trois axes indépendants, exploitant la pression solaire, et ne nécessitant pas de dépointer les générateurs solaires par rapport au Soleil. Ce dispositif est utilisé pour contrôle l'attitude du satellite 10, c'est-à-dire pour effectuer au moins l'une des opérations suivantes :
- compenser de façon continue tout ou partie des moments perturbateurs induits par la pression solaire ou d'autres effets perturbateurs,
- dé-saturer des roues de réaction cumulant des moments cinétiques indésirables,
- créer des moments pour modifier l'attitude du satellite 10.

## Revendications

1. Dispositif de contrôle de l'attitude d'un satellite (10) exploitant la pression solaire comportant au moins deux générateurs solaires (14a, 14b) destinés à être agencés de part et d'autre d'un corps central (12) du satellite (10) et présentant chacun une face à exposer au Soleil, dite «face avant » (140), ledit dispositif comportant en outre au moins trois surfaces (16) dont les propriétés optiques sont commandables, ledit dispositif étant **caractérisé en ce que** lesdites surfaces (16) à propriétés optiques commandables sont agencées :
- sur des ailettes (18) liées aux générateurs solaires (14a, 14b), chaque ailette (18) étant fixe par rapport au générateur solaire (14a, 14b) auquel est liée ladite ailette, et
- de sorte qu'au moins deux desdites surfaces (16) à propriétés optiques commandables sont non parallèles lorsque les faces avant (140) des générateurs solaires (14a, 14b) sont orientées de façon optimale par rapport au Soleil,
et **en ce que** ledit dispositif comporte un module de commande adapté à commander séparément les propriétés optiques de chaque surface (16) à propriétés optiques commandables, de sorte que des moments suivant trois axes indépendants peuvent être créés en maintenant les faces avant (140) des générateurs solaires (14a, 14b) selon leur orientation optimale.

2. Dispositif selon la revendication 1, **caractérisé en ce qu'**il comporte au moins quatre ailettes (18) à surfaces (16) à propriétés optiques commandables sensiblement planes, chacune de ces surfaces présentant une inclinaison par rapport à la face avant (140) du générateur solaire (14a, 14b) auquel ladite surface est liée.

3. Dispositif selon la revendication 2, **caractérisé en ce que** l'inclinaison (θ), entre la surface (16) à propriétés optiques commandables de chaque ailette (18) et la face avant (140) du générateur solaire (14a, 14b) auquel est liée ladite ailette, est de valeur absolue comprise entre 5° et 45°, de préférence comprise entre 5° et 20°.

4. Dispositif selon la revendication 3, **caractérisé en ce que** les ailettes (18) d'une paire d'ailettes d'un générateur solaire (14a, 14b) sont agencées de sorte à présenter sensiblement la même inclinaison (θ) par rapport à la face avant de ce générateur solaire.

5. Dispositif selon l'une des revendications précédentes, **caractérisé en ce qu'**au moins une surface (16) à propriétés optiques commandables comporte un matériau électro-chrome, de préférence un matériau électro-chrome pouvant prendre au moins deux états optiques.

6. Dispositif selon l'une des revendications précédentes, **caractérisé en ce qu'**au moins une surface (16) à propriétés optiques commandables comporte un réseau de plusieurs cellules (160) à propriétés optiques commandables, le module de commande étant adapté à commander séparément chaque cellule (160) à propriétés optiques commandables.

7. Dispositif selon l'une des revendications 1 à 4, **caractérisé en ce qu'**au moins une surface (16) à propriétés optiques commandables est réalisée avec un élément (166) à propriétés optiques statiques, ledit élément à propriétés optiques statiques comportant au moins deux zones à propriétés optiques statiques différentes, et avec des moyens (162a, 162b) de modifier mécaniquement la proportion respective de chacune des au moins deux zones à propriétés optiques statiques différentes dans la partie de l'élément (166) à propriétés optiques statiques qui est exposée aux rayons du Soleil.

8. Dispositif selon la revendication 7, **caractérisé en ce que** l'élément à propriétés optiques statiques est une bande (166), et **en ce qu'**il comporte au moins un rouleau (162a, 162b) dont la rotation entraîne le défilement de la bande (166) et la modification, dans la partie de la bande exposée aux rayons du Soleil, de la proportion respective de chacune des au moins deux zones à propriétés optiques statiques différentes.

9. Satellite (10) destiné à être placé en orbite géosynchrone, **caractérisé en ce qu'**il comporte un dispositif de contrôle d'attitude selon l'une quelconque des revendications 1 à 8.

10. Procédé de commande d'un satellite (10) selon la revendication 9, **caractérisé en ce qu'**il comporte les étapes de :
- (70) détermination d'une orientation optimale des faces avant (140) des générateurs solaires (14a, 14b) par rapport au Soleil,
- (72) orientation des faces avant (140) des générateurs solaires (14a, 14b) selon l'orientation optimale,
- (74) détermination d'un moment à former suivant trois axes indépendants pour contrôler l'attitude du satellite (10),
- (76) commande des propriétés optiques des surfaces (16) à propriétés optiques commandables de sorte à former lesdits moments de contrôle d'attitude, tout en maintenant les faces avant (140) des générateurs solaires (14a, 14b) selon leur orientation optimale.

11. Procédé selon la revendication 10, **caractérisé en ce que** les propriétés optiques des surfaces (16) sont modulées dans le temps de sorte à obtenir un état optique correspondant à une moyenne pondérée des états optiques disponibles pour lesdites surfaces.

## Patentansprüche

1. Lageregelungsvorrichtung für einen Satelliten (10) unter Verwendung des Solardrucks, umfassend zumindest zwei Solargeneratoren (14a, 14b), die dazu bestimmt sind, um beiderseits eines Zentralkorpus (12) des Satelliten (10) angeordnet zu werden, und die jeweils eine Seite aufweisen, die der Sonne zuzuwenden ist, und die "Vorderseite" (140) genannt wird, wobei die besagte Vorrichtung darüber hinaus zumindest drei Flächen (16) umfasst, deren optischen Eigenschaften steuerbar sind, und die besagte Vorrichtung **dadurch gekennzeichnet ist, dass** die besagten Flächen (16) mit den steuerbaren optischen Eigenschaften folgendermaßen angeordnet sind:
- auf den Flügeln (18), die mit den Solargeneratoren (14a, 14b) verbunden sind, wobei jeder Flügel (18) im Verhältnis zu dem Solargenerator (14a, 14b) fest steht, mit dem der besagte Flügel verbunden ist, und
- sodass zumindest zwei der besagten Flächen (16) mit den steuerbaren optischen Eigenschaften nicht parallel sind, wenn die Vorderseiten (140) der Solargeneratoren (14a, 14b) optimal zur Sonne ausgerichtet sind,
und dadurch, dass die besagte Vorrichtung ein Steuermodul umfasst, das sich dazu eignet, die optischen Eigenschaften einer jeden Fläche (16) mit den steuerbaren optischen Eigenschaften unabhängig voneinander zu steuern, sodass Momente gemäß dreier unabhängiger Achsen geschaffen werden können, indem man die Vorderseiten (140) der Solargeneratoren (14a, 14b) gemäß ihrer optimalen Ausrichtung festhält.

2. Vorrichtung nach Anspruch 1, **dadurch gekennzeichnet, dass** sie zumindest vier Flügel (18) mit in etwa ebenen Flächen (16) mit steuerbaren optischen Eigenschaften umfasst, wobei jede dieser Flächen eine Neigung im Verhältnis zur Vorderseite (140) des Solargenerators (14a, 14b) aufweist, mit dem die besagte Fläche verbunden ist.

3. Vorrichtung nach Anspruch 2, **dadurch gekennzeichnet, dass** die Neigung (θ) zwischen der Fläche (16) mit steuerbaren optischen Eigenschaften eines jeden Flügels (18) und der Vorderseite (140) des Solargenerators (14a, 14b), mit dem der besagte Flügel verbunden ist, einen Absolutwert aufweist, der zwischen 5° und 45° liegt, vorzugsweise jedoch zwishen 5° und 20° enthalten ist.

4. Vorrichtung nach Anspruch 3, **dadurch gekennzeichnet, dass** die Flügel (18) eines Flügelpaares eines Solargenerators (14a, 14b) so angeordnet sind, dass sie im Verhältnis zur Vorderseite dieses Solargenerators in etwa dieselbe Neigung (θ) aufweisen.

5. Vorrichtung nach einem der vorherigen Ansprüche, **dadurch gekennzeichnet, dass** zumindest eine Fläche (16) mit steuerbaren optischen Eigenschaften einen Elektrochrom-Werkstoff umfasst, vorzugsweise aber einen Elektrochrom-Werkstoff, der in der Lage ist, zumindest zwei optische Zustände einzunehmen.

6. Vorrichtung nach einem der vorherigen Ansprüche, **dadurch gekennzeichnet, dass** zumindest eine Fläche (16) mit steuerbaren optischen Eigenschaften ein Netzwerk von mehreren Zellen (160) mit steuerbaren optischen Eigenschaften umfasst, wobei sich das Steuermodul dazu eignet, jede Zelle (160) mit steuerbaren optischen Eigenschaften unabhängig zu steuern.

7. Vorrichtung nach einem der Ansprüche 1 bis 4, **dadurch gekennzeichnet, dass** zumindest eine Fläche (16) mit steuerbaren optischen Eigenschaften mit einem Element (166) mit statischen optischen Eigenschaften ausgeführt ist, wobei das besagte Element mit statischen optischen Eigenschaften zumindest zwei Zonen mit unterschiedlichen optischen Eigenschaften umfasst, und mit Vorrichtungen (162a, 162b) zur mechanischen Änderung des jeweiligen Anteils einer jeden der zumindest zwei Zonen mit unterschiedlichen optischen Eigenschaften in dem Abschnitt des Elements (166) mit statischen optischen Eigenschaften, der den Sonnenstrahlen ausgesetzt ist.

8. Vorrichtung nach Anspruch 7, **dadurch gekennzeichnet, dass** das Element mit statischen optischen Eigenschaften ein Band (166) ist, und dadurch, dass es zumindest eine Rolle (162a, 162b) umfasst, deren Drehung das Band (166) zum Rollen bringt und den jeweiligen Anteil einer jeden der zumindest zwei Zonen mit unterschiedlichen optischen Eigenschaften in jenem Abschnitt des Bandes ändert, der den Sonnenstrahlen ausgesetzt ist.

9. Satellit (10), der dazu bestimmt ist, auf eine geosynchrone Umlaufbahn gebracht zu werden, **dadurch gekennzeichnet, dass** er eine Lageregelungsvorrichtung nach irgendeinem der Ansprüche 1 bis 8 umfasst.

10. Verfahren zum Steuern eines Satelliten (10) nach Anspruch 9, **dadurch gekennzeichnet, dass** es die folgenden Schritte umfasst:
- (70) Bestimmung einer optimalen Ausrichtung der Vorderseiten (140) der Solargeneratoren (14a, 14b) im Verhältnis zur Sonne,
- (72) Ausrichtung der Vorderseiten (140) der Solargeneratoren (14a, 14b) in Richtung der optimalen Ausrichtung,
- (74) Bestimmung eines zu bildenden Moments gemäß dreier unabhängiger Achsen zur Lageregelung des Satelliten (10),
- (76) Steuern der optischen Eigenschaften der Flächen (16) mit steuerbaren optischen Eigenschaften, um die besagten Lageregelungsmomente unter Beibehaltung der Vorderseiten (140) der Solargeneratoren (14a, 14b) in ihrer optimalen Ausrichtung zu bilden.

11. Verfahren nach Anspruch 10, **dadurch gekennzeichnet, dass** die optischen Eigenschaften der Flächen (16) mit der Zeit so moduliert werden, dass man einen optischen Zustand erhält, der einem gewichteten Mittelwert der optischen Zustände entspricht, die für die besagten Flächen verfügbar sind.

## Claims

1. Device for controlling the attitude of a satellite (10) exploiting solar pressure, comprising at least two solar generators (14a, 14b) destined to be arranged on either side of a central body (12) of the satellite (10) and each having one face to be exposed to the Sun (140), referred to as "front face", said device further comprising at least three surfaces (16) whose optical properties can be commanded, said device being **characterized in that** said surfaces (16) whose optical properties can be commanded are arranged:
- on flaps (18) connected to the solar generators (14a, 14b), each flap (18) being fixed with respect to the solar generator (14a, 14b) to which said flap is connected, and
- such that at least two of said surfaces (16) whose optical properties can be commanded are not parallel when the front faces (140) of the solar generators (14a, 14b) are optimally oriented with respect to the Sun,
and **in that** said device comprises a command module adapted to command separately the optical properties of each surface (16) whose optical properties can be commanded, such that torques around three independent axes can be created while the front faces (140) of the solar generators (14a, 14b) are kept in their optimal orientation with respect to the Sun.

2. Device according to claim 1, **characterized in that** it comprises at least four flaps (18) having substantially flat surfaces (16) whose optical properties can be commanded, each of these surfaces having an inclination with respect to the front face (140) of the solar generator (14a, 14b) to which said surface is connected.

3. Device according to claim 2, **characterized in that** the absolute value of the inclination (θ), between the surface (16) whose optical properties can be commanded of each flap (18) and the front face (140) of the solar generator (14a, 14b) to which said flap is connected, is between 5° and 45°, preferably between 5° and 20°.

4. Device according to claim 3, **characterized in that** the flaps (18) of one pair of flaps of a solar generator (14a, 14b) are arranged so as to have substantially the same inclination (θ) with respect to said solar generator's front face.

5. Device according to one of the preceding claims, **characterized in that** at least one surface (16) whose optical properties can be commanded comprises an electrochromic material, preferably an electrochromic material that can take at least two optical states.

6. Device according to one of the preceding claims, **characterized in that** at least one surface (16) whose optical properties can be commanded comprises a network of several cells (160) whose optical properties can be commanded, the command module being adapted to command separately each cell (160) whose optical properties can be commanded.

7. Device according to one of claims 1 to 4, **characterized in that** at least one surface (16) whose optical properties can be commanded is realized with an element (166) having static optical properties, said element with static optical properties comprising at least two areas with different static optical properties, and with means (162a, 162b) of mechanically modifying the respective proportion of each of the at least two areas with different static optical properties in the portion of the element (166) with static optical properties that is exposed to the Sun's rays.

8. Device according to claim 7, **characterized in that** the element with static optical properties is a band (166), and **in that** it comprises at least one roller (162a, 162b) whose rotation causes the scrolling of the band (166) and the modification of the respective proportion of each of the at least two areas with different static optical properties in the portion of the band exposed to the Sun's rays.

9. Satellite (10) destined to be placed in geosynchronous orbit, **characterized in that** it comprises an attitude control device according to any one of claims 1 to 8.

10. Method for commanding a satellite (10) according to claim 9, **characterized in that** it comprises the following steps:
- (70) determining an optimum orientation of the front faces (140) of the solar generators (14a, 14b) with respect to the Sun,
- (72) orienting the front faces (140) of the solar generators (14a, 14b) according to the optimum orientation,
- (74) determining a torque to be formed around three independent axes for controlling the attitude of the satellite (10),
- (76) commanding the optical properties of the surfaces (16) whose optical properties can be commanded so as to form said attitude control torques while keeping the front faces (140) of the solar generators (14a, 14b) in their optimum orientation.

11. Method according to claim 10, **characterized in that** the optical properties of the surfaces (16) are modulated over time so as to obtain an optical state corresponding to a weighted mean of the optical states available for said surfaces.
